# EUROPÄISCHE PATENTSCHRIFT

(11) **EP 1 244 574 B1**
(45) Veröffentlichungstag und Bekanntmachung des Hinweises auf die Patenterteilung: **14.06.2006**
(21) Anmeldenummer: 00967754.3
(22) Anmeldetag: 22.09.2000
(51) Int. Cl.: B60R 13/08

(54) **STIRNWANDISOLATION**
FACE WALL INSULATION
ISOLATION DE PAROI DE SEPARATION

(30) Priorität: 29.09.1999 DE 19946655
(43) Veröffentlichungstag der Anmeldung: 02.10.2002
(73) Patentinhaber: CWW-GERKO Akustik GmbH, 67547 Worms (DE)
(72) Erfinder: FREIST, Christoph, 33613 Bielefeld (DE); SIERING, Hermann, 30916 Isernhagen (DE); JORDING, Norbert, 32257 Bünde (DE); DOPHEIDE, Ralf, 33649 Bielefeld (DE)
(74) Vertreter: Leineweber, Jürgen
(86) Internationale Anmeldenummer: PCT/EP2000/009295
(87) Internationale Veröffentlichungsnummer: WO 2001/023215

(56) Entgegenhaltungen:
- EP-A- 0 329 526
- US-A- 4 043 022
- US-A- 4 083 595
- US-A- 4 901 395

## Beschreibung

Die Erfindung beziht sich auf ein Verfahren zur Abdichtung eines für die Durchführung einer LEitung oder eines Bauteils bestimmten Durchbruchs in einer mit einer Stirnwandisolation ausgerüsteten lrennwand zwischen dem Innenraum eines Fahrzeugs und dem Motorraum.

Weiterhin bezieht sich die Erfindung auf eine für dieses Verfahren geeignete Stirnwandisolation. Schließlich betrifft die Erfindung ein Verfahren zur Herstellung der Stirnwandisolation.

Im, Fahrzeugbau ist es bekannt, die Trennwand zwischen dem Innenraum eines Fahrzeugs und seinem Motorraum mit einer Stirnwandisolation auszurüsten. Hierbei handelt es sich um ein in der Regel mehrschichtiges System, das der Form der Stirnwand angepasst ist. Es umfasst üblicherweise eine Schwerschicht und eine Leichtschicht, z.B. Schaumstoffschicht, die ein Masse-Feder-System bilden. Die Stirnwandisolation liegt der aus Blech bestehenden Stirnwand an und hat die Aufgabe, den Fahrgastraum vom Motorraum akustisch zu isolicren.

Stirnwand und Stirnwandisolation müssen mit einer Vielzahl von Durchbrüchen verschiedener Form und Größe verschen werden, die im montierten Zustand von mechanischen und/oder elektrischen Verbindungen zwischen dem Armaturenblock oder anderen Bauteilen im Fahrgastraum einerseits und dem Motorraum andererseits durchsetzt werden. Die Blechstirnwand ist in aller Regel mit diesen. Durchbrüchen ausgerüstet. In der Stirnwandisolation sind die Durchbrüche entweder bereits vorhanden oder können z.B. durch vorzugsweise kreuzförmige Einschnitte erzeugt werden.

In Bezug auf die gewünschte Isolationswirkung handelt es sich bei den Durchbrüchen um Schwachslellen. Ihre endgültige Abdichtung kann erst nach der Montage des Armaturenblocks vorgenommen werden. Das Abdichten erfolgt z.B. durch Abkitten oder durch Zustopfen mit Schaum. Eine bessere aber teure Lösung ist der Einsatz von Gummitüllen.

Die mit dem nachträglichen Abdichten der Durchbrüche verbundenen Arbeitsschritte müssen per Hand ausgeführt werden, da viele der Durchbrüche an schwer zugänglichen Stellen liegen. Immer wieder kommt es zu Fehlern bei diesen Arbeitsschritten, so dass die gewünschte Isolation des Fahrgastraumes vom Motorraum nicht immer sichergestellt ist.

Ein Verfahren der eingangs erwähnten Art ist aus der US 49 01 395 A bekannt. Dabei wird das durch den Durchbruch durchzuführende Bauteil zunächst mit einer Tülle ausgerüstet, deren Außenseite gegenüber der Stirnwandöffnung abgedichtet wird.

Zum Stand der rechnik gehört auch noch der Inhalt der US 40 43 022 A und der EP 329 526 A. Offenbart sind Absorptions-Bauteile mit Schichten, die sich durch thermische Einwirkung ausdehnen. Die Ausdchnungsschritte werden vor der Durchführung von Leitungen oder Bauteilen vorgenommen. Durch Einsetzen von Rührchen oder Hülsen werden Durchtrittsöffnungen frei gehalten, die für die später zu montierenden Bauteile bestimmt sind.

Der vorliegenden Erfindung liegt die Aufgabe zugrunde, die Isolation zwischen Fahrgastraum und Motorraum zu verhessern.

Erfindungsgemäß wird diese Aufgabe durch die kennzeichnenden Merkmale der Patentansprüche gelöst.

Blähschaum oder auch expandierender Schaum ist bekannt. Es handelt sich um schaumartiges Material, das unter dem Einfluβ von Wärme Poren bildet oder seine Poren vergrößert, so dass eine maßgebliebe Vergrößerung des Volumens eintritt.

Durch die Verwendung von Blähschaum erfolgt die Abdichtung der Durchbrüche zwischen Fahrgastraum und Motorraum selbsttätig. Es muß lediglich sichergestellt sein, dass der Blähschaum die Montage des Armaturenblocks nicht behindert, d.h., dass der Blähschaum erst nach der Montage expandiert. Er kann z.B. in Form von Passstücken nach der Montage und vor seiner Expansion per Hand in die noch abzudichtenden Öffnungen eingelegt werden. Eine andere Möglichkeit besteht darin, dass die Durchbrüche in der Stirnwand und/oder Stirnwandisolation bereits mit Blähschaum ausgerüstet sind, der nach der Montage expandiert.

Besonders zweckmäßig ist es, wenn ein Blähaschaum verwendet wird, der bei den im Motorraum auftretenden Temperaturen expandiert. Die Ausnutzung der Motorwärme ist einfach. Außerdem ist sichergestellt, dass die Expansion des Blähschaumes erst nach der Montage des fahrzeugs beginnt. Eine andere Moglichkeit besteht darin, einen Werkstoff zu verwenden, der evakuierte Hohlräume, z.B. Kissen, enthält, die nach der Montage, z.B. durch Einstecken belüftet werden und dadurch ihr Volumen vergrößern. Kissen dieser Art sind an sich z.B. aus der DE 13 24 508 A1 bekannt. Sie besitzen u.a. eine Schaumstoffeinlage, so dass ihr Volumen durch Evakuieren kompaktierbar und Belüften vergrößerbar ist.

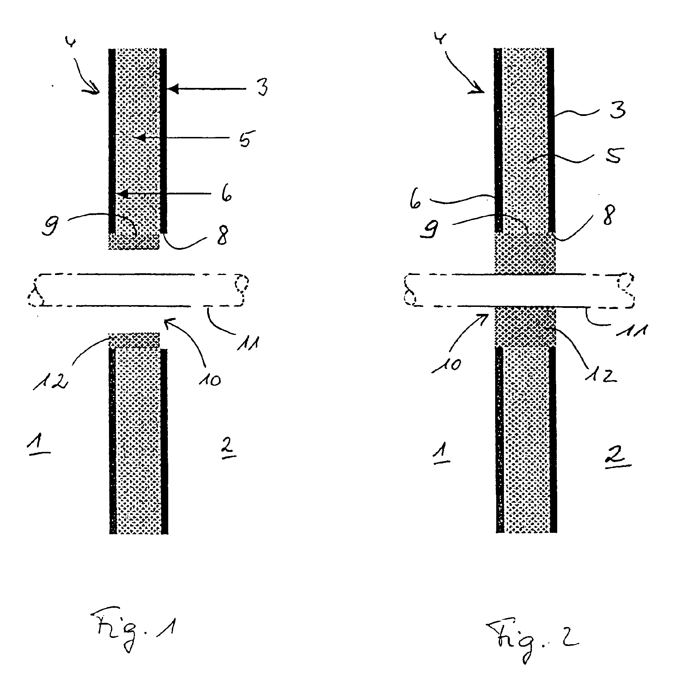

Weitere Vorteile und EinzdheitcI1 der Erfindung sollen anhand eines in den Figuren 1 und 2 schematisch dargestellten Ausführungsbeispieles erläutert werden.

In den Figuren ist die aus Blech bestehende Stirnwand zwischen dem Fahrgastraurn 1 und den Motorraum 2 mit 3 bezeichnet. Ihr liegt eine Stirnwandisolation 4 auf, die in an sich bekannter Weise aus einer Schaumstoffschicht 5 (z.B. PUR) nud einer Schwerschicht 6 besteht.

Stirnwand 3 und Stirnwandisolation 4 sind jeweils mit einer Öffnung 8 bzw. 9 ausgerüstet. Sie bilden gemeinsam den Durchbruch 10, den eine mit 11 bezeichnete Leitung durchsetzt.

Figur 1 zeigt den Zustand nach der Montage z.B. des Armaturenblockes im Fahrgastraum 1 und vor der danach notwendigen Abdichtung des Durchbruchs 10. Um diese Abdichtung zu erreichen, ist der innere Rand der Öffnung 9 in der Stirnwandisolation 4 mit einem Ring 12 aus Blähschaum ausgerüstet. In dem Zustand, den Figur 1 darstellt, hat noch keine Expansion stattgefunden.

Figur 2 zeigt den Zustand nach der Expansion des aus Blähschaum bestehenden Ringes 12. Der Zwischenraum zwischen den Innenrändern der Öffnungen 8 und 9 und der durchgeführten Leitung 11 ist dicht verschlossen. Sowohl die thermische als auch die akustische Isolationswirkung zwischen Fahrgastraum 1 und Motorraum 2 ist sichergestellt.

Die Blähschaumeinsätze 12 können z.B. von Hand nach der Montage in den Durchbruch 10 eingesetzt werden. Besonders zweckmäßig ist es j e-doch, wenn die Stirnwandisolation 4 bereits mit ringförmigen Einsätzen 12 aus Blähschaum bei ihrer Herstellung ausgerüstet sind. Dieses kann dadurch geschehen, dass ein schichtförmiger Blähschaumeinsatz 12 mit dem Innenrand der Öffnung 9 z.B. durch Kleben oder Einschäumen verbunden wird.

Die Initiierung der Expansion kann z.B. durch ein Tränkmittel erfolgen, das nach der Montage auf die Blähschaumeinsätze 12 gesprüht wird. Zweckmäßig ist es jedoch, einen Blähschaum zu verwenden, der durch thermische Einwirkung expandiert. Dazu kann die Motorwärme ausgenutzt werden.

## Patentansprüche

1. Verfahren zur Abdichtung eines für die Durchführung einer Leitung oder eines Bauteils (11) bestimmten Durchbruchs (10) in einer mit einer Stirnwandisolation (4) ausgerüsteten Trennwand (3) zwischen dem Innenraum, (1) eines Fahrzeugs und dem Motorraum (2), **dadurch gekennzeichnet, dass** nach der Durchführung einer Leitung oder eines Bauteils (11) ein oder mehrere Passstüeke aus Blähschaum (12) in den Durchbruch (10) eingesetzt werden, und dass danach deren Expansion initiiert wird.

2. Verfahren zur Abdichtung eines für die Durchführung einer Leitung oder eines Bauteils (11) bestimmten Durchbruchs (10) in einer mit einer Stirnwandisolation (4) ausgerüsteten Trennwand (3) zwisehen dem Innenraum (1) eines Fahrzeugs und dem Motorraum (2), **dadurch gekennzeichnet, dass** eine Stirnwandisolation (4) mit einer Öffnung (9) eingesetzt wird, deren Innenrand mit einer Blähschaumschicht (12) ausgerüstet ist, und dass nach der Durchführung einer Leitung oder eines Bauteils (11) durch den Durchbruch (10) die Expansion der Blähschaumschicht (12) initiiert wird.

3. Verfahren nach Anspruch 1 oder 2, **dadurch gekennzeichnet, dass** ein durch Wärmeeinwirkung sein Volumen vergrößernder Blähschaum (12) verwendet wird.

4. Verfahren nach Anspruch 3, **dadurch gekennzeichnet, dass** die Betriubstcrnperatur des Motors zur Jnitiierung der Expansion des Blahschaums (12) verwendet wird.

5. Stirnwandisolation (4) zur Verwendung bei einem Verfahren nach einem der Patentansprüche 1 bis 4, **dadurch gekennzeichnet, dass** sie Öffnungen (9) aufweist, deren Innenränder mit Blähschaumeinsätzen (12) ausgerüstet sind.

6. Verfahren zur Herstellung einer Stirnwandisolation (4) nach Anspruch 5, **dadurch gekennzeichnet, dass** sie mit Öffnungen (9) versehen wird, welche gemeinsam mit Öffnungen (8) in der Stirnwand (3) Durchbrüche (10) bilden, und dass die Öffnungen (9) mit der Form dieser Öffnungen entsprechenden Blähschaumeinsätzen ausgerüstet werden.

7. Verfahren nach Anspruch 6, **dadurch gekennzeichnet, dass** der Blähschaumeinsatz (12) als Schicht ausgebildet ist, die mit dem Innenrand der Öffnung (9), z.B. durch Kleben oder Einschäumen, verbunden wird.

8. Verfahren zur Abdichtung eines der Durchführung einer Leitung oder eines Bauteils (11) bestimmten Durchbruchs (10) in einer mit einer Stirnwandisolation (4) ausgerüsteten Trennwand (3) zwischen dem Innenraum (1) eines Fahrzeuges und dem Motorraum (2), **dadurch gekennzeichnet, dass** nach der Durchführung einer Leitung oder eines Bauteils (11) ein oder mehrere Passstücke in den Durchbruch (10) eingesetzt werden, deren Bestandteile ein oder mehrere Kissen mit vorab evakuierten Hohlräumen sind, und dass danach die Expansion der Kissen durch Belüften ihrer Hohlräume initiert wird.

9. Verfähren zur Abdichtung eines der Durchführung einer Leitung oder eines Bauteils (11) bestimmten Durchbruchs (10) in einer mit einer Stirnwandisolation (4) ausgerüsteten Trennwand (3) zwischen dem Innenraum (1) eines Fahrzeuges und dem Motorraum (2), **dadurch gekennzeichnet, dass** eine Stimwandisolation verwendet wird, deren Innenrand mit einer Schicht (12) ausgerüstet ist, deren Bestandteile ein oder mehrere Kissen mit vorab evakuierten Hohlräumen sind, und dass nach der Durchführung einer Leitung oder eines Bauteils (11) durch den Durchbruch (10) die Expansion der Schicht (12) durch Belüften der Hohlräume der Kissen initiiert wird.

10. Stirnwandisolation (4) zur Verwendung bei einem Verfahren nach Anspruch 8 oder 9, **dadurch gekennzeichnet, dass** sie Öffnungen (9) aufweist, deren Innenränder mit einer Schicht (12) ausgerüstet sind, deren Bestandteile ein oder mehrere Kissen mit vorab evakuierten Hohlräumen sind,.

## Claims

1. Procedure for sealing a cutout (10) in the separating wall (3) between the car interior (1) and engine compartment (2) intended as penetration location for a conduit or component (11), said separating wall being equipped with a face wall insulation (4), said procedure **characterized by:**
one or more filler pads being inserted into the cutout (10) subsequent to the conduit or component (11) having been pushed through said cutout, said filler pads consisting of an expandable foam material (12) and the expansion of said filler pads subsequently being initiated.

2. Procedure for sealing a cutout (10) in the separating wall (3) between the car interior (1) and engine compartment (2) intended as penetration location for a conduit or component (11), said separating wall being equipped with a face wall insulation (4), said procedure **characterized by:**
a face wall insulation (4) having an opening (9) being used, the inside rim of said opening being equipped with a layer of expandable foam material (12) and the expansion of said layer of expandable foam material (12) being initiated subsequent to the conduit or component (11) having been pushed through the cutout (10).

3. Procedure in accordance with anyone of claims 1 or 2 **characterized by**:
using an expandable foam material (12), the volume of which enlarges when the material is subjected to heat.

4. Procedure in accordance with claims 3 **characterized by**:
the operating temperature of the motor being employed to initiate the expansion of the expandable foam material (12).

5. Face wall insulation (4) for use in a procedure in accordance with anyone of claims 1 through **4 characterized by**:
said face wall insulation having openings (9), the inside rims of which having been equipped with expandable foam material inserts (12).

6. Procedure for manufacturing a face wall insulation (4) in accordance with claim 5 **characterized by**:
said face wall insulation having openings (9) which, together with the openings (8) in the face wall (3), form the cutouts (10) and said openings (9) having been equipped with expandable foam material inserts corresponding to the shape of these cutouts.

7. Procedure in accordance with claim 6 **characterized by:**
said expandable foam material insert (12) being of the form of a layer which is connected by being glued or foamed into the inside rim of said opening (9).

8. Procedure for sealing a cutout (10) in the separating wall (3) between the car interior (1) and engine compartment (2) intended as penetration location for a conduit or component (11), said separating wall being equipped with a face wall insulation (4), said procedure **characterized by:**
one or more filler pads being inserted into the cutout (10) subsequent to the conduit or component (11) having been pushed through said cutout, said filler pads consisting of one or more cushion elements with previously evacuated hollows, and subsequently initiating the expansion of said cushion elements by aerating the hollows of these elements.

9. Procedure for sealing a cutout (10) in the separating wall (3) between the car interior (1) and engine compartment (2) intended as penetration location for a conduit or component (11), said separating wall being equipped with a face wall insulation (4), said procedure **characterized by:**
a face wall insulation being used, the internal rim of which having been equipped with a layer (12) consisting of one or more cushion elements with previously evacuated hollows and, subsequent to the conduit or component (11) having been pushed through the cutout (10), initiating the expansion of said layer (12) by aerating the hollows of said cushion elements.

10. Face wall insulation (4) for use in anyone of the procedures in accordance with claim 8 or 9 **characterized by:**
having openings (9), the inner rims of which having been equipped with a layer (12) consisting of one or more cushion elements with previously evacuated hollows.

## Revendications

1. Procédé pour étanchéifier un passage (10) destiné à la traversée d'un câble ou d'un élément de construction (11) dans une paroi de séparation (3) munie d'une isolation de paroi de séparation (4) entre l'habitacle (1) d'un véhicule et le compartiment moteur (2), **caractérisé en ce qu'**après la traversée d'un câble ou d'un élément de construction (11), un ou plusieurs raccords en mousse expansible (12) sont insérés dans le passage (10), leur expansion étant ensuite provoquée.

2. Procédé pour étanchéifier un passage (10) destiné à la traversée d'un câble ou d'un élément de construction (11) dans une paroi de séparation (3) munie d'une isolation de paroi de séparation (4) entre l'habitacle (1) d'un véhicule et le compartiment moteur (2), **caractérisé en ce qu'**une isolation de paroi de séparation (4) dotée d'une ouverture (9) est insérée, son bord intérieur étant muni d'une couche de mousse expansible (12), et après la traversée du passage (10) par un câble ou un élément de construction (11), l'expansion de la couche de mousse expansible (12) est provoquée.

3. Procédé selon la revendication 1 ou 2, **caractérisé en ce qu'**une mousse expansible (12) augmentant de volume sous l'effet de la chaleur est utilisée.

4. Procédé selon la revendication 3, **caractérisé en ce que** la température de fonctionnement du moteur est utilisée pour provoquer l'expansion de la mousse expansible (12).

5. Isolation de paroi de séparation (4) à utiliser avec un procédé selon l'une des revendications 1 à 4, **caractérisée en ce qu'**elle présente des ouvertures (9) dont les bords intérieurs sont munis d'inserts de mousse expansible (12).

6. Procédé pour fabriquer une isolation de paroi de séparation (4) selon la revendication 5, **caractérisé en ce qu'**elle est dotée d'ouvertures (9) qui forment avec des ouvertures (8) des passages (10) dans la paroi de séparation (3), et les ouvertures (9) sont munies d'inserts de mousse expansible correspondant à la forme de ces ouvertures.

7. Procédé selon la revendication 6, **caractérisé en ce que** l'insert de mousse expansible (12) est configuré comme une couche qui est liée avec le bord intérieur de l'ouverture (9), par exemple par collage ou par injection de mousse.

8. Procédé pour étanchéifier un passage (10) destiné à la traversée d'un câble ou d'un élément de construction (11) dans une paroi de séparation (3) munie d'une isolation de paroi de séparation (4) entre l'habitacle (1) d'un véhicule et le compartiment moteur (2), **caractérisé en ce qu'**après la traversée d'un câble ou d'un élément de construction (11), un ou plusieurs raccords composés d'un ou plusieurs coussins dotés de cavités préalablement vidées sont insérés dans le passage (10), et ensuite l'expansion des coussins est provoquée en ventilant leurs cavités.

9. Procédé pour étanchéifier un passage (10) destiné à la traversée d'un câble ou d'un élément de construction (11) dans une paroi de séparation (3) munie d'une isolation de paroi de séparation (4) entre l'habitacle (1) d'un véhicule et le compartiment moteur (2), **caractérisé en ce qu'**on utilise une isolation de paroi de séparation, dont le bord intérieur est muni d'une couche (12) composée d'un ou plusieurs coussins dotés de cavités préalablement vidées, et après la traversée du passage (10) par un câble ou un élément de construction (11), l'expansion de la couche (12) est provoquée en ventilant les cavités des coussins.

10. Isolation de paroi de séparation (4) à utiliser avec un procédé selon la revendication 8 ou 9, **caractérisée en ce qu'**elle présente des ouvertures (9) dont les bords intérieurs sont munis d'une couche (12) composée d'un ou plusieurs coussins dotés de cavités préalablement vidées.
